# EUROPÄISCHE PATENTSCHRIFT

(11) **EP 0 480 137 B1**
(45) Veröffentlichungstag und Bekanntmachung des Hinweises auf die Patenterteilung: **30.03.1994**
(21) Anmeldenummer: 91112630.8
(22) Anmeldetag: 26.07.1991
(51) Int. Cl.: B60R 22/18

(54) **Gurtstrammer für Kraftfahrzeuge mit einem Dreipunkt-Sicherheitsgurt**
Pre-tensioner for a three-point safety belt system for vehicles
Tendeur de ceinture de sécurité pour un véhicule avec une ceinture de sécurité à trois points d'ancrage

(30) Priorität: 12.10.1990 DE 4032384
(43) Veröffentlichungstag der Anmeldung: 15.04.1992
(73) Patentinhaber: AUDI AG, 85002 Ingolstadt (DE)
(72) Erfinder:
(74) Vertreter: Engelhardt, Harald

(56) Entgegenhaltungen:
- EP-A- 0 261 006
- FR-A- 2 214 491
- FR-A- 2 444 473

## Beschreibung

Die Erfindung betrifft einen Gurtstrammer für Kraftfahrzeuge mit einem Dreipunkt-Sicherheitsgurt nach dem Oberbegriff des Anspruchs 1.

Dreipunkt-Sicherheitsgurte sind mit einem Ende des Gurtbandes fest mit dem Fahrzeugaufbau verbunden und das andere Ende des Gurtbandes ist an einer Aufwickelrolle gehalten. Die Aufwickelrolle ist federbelastet und hält in an sich bekannter Weise das Gurtband in Anlage an einer angeschnallten Person. In einem Aufprallfall wird die Rollenachse arretiert, so daß das Gurtband in der angelegten Position für einen Rückhalt der angeschnallten Person festgelegt ist.

Nachteilig an dieser Ausführung ist, daß dabei erst der noch lose gewickelte Restgurtwickel gestrafft werden muß und durch diesen Filmspuleneffekt der festgelegte Teil des Gurtbands unerwünscht verlängert wird.

Um hier eine Verbesserung zu schaffen, sind sogenannte Gurtbremsen als Sperreinrichtungen bekannt:

Bekannte Gurtbremsen (DE-A-29 43 441, DE-A-29 50 443) sind unmittelbar an der Aufwickelrolle angebracht und klemmen das Gurtband nach einer Aktivierung durch einen Gurtzug zur Eliminierung des Filmspuleneffekts nach dem Restgurtwickel fest.

In einer Ausführungsform einer bekannten Gurtbremse (DE-A-34 17 877) wird ein bewegliches Klemmteil verwendet, das im Abstand zur Aufwickelrolle angebracht ist. In einer anderen, bekannten Ausführungsform (DE-A-36 06 912) wird das Klemmen über zwei gegeneinander bewegliche Keile durchgeführt.

Auch beim Eliminieren des Filmspuleneffekts am Restgurtwickel kann das Gurtband für einen optimalen Schutz nicht straff genug am Körper einer angeschnallten Person anliegen, wie dies beispielsweise beim Tragen dicker Winterkleidung der Fall ist. Um auch hier eine Verbesserung zu schaffen, sind sogenannte Gurtstrammer oder Rückstrammer bekannt, die im Aufprallfall den Gurt straffen:

Dazu ist es bekannt, über ein Seil und eine Umlenkrolle den Motorblock mit der Aufwickelrolle zu verbinden. Bei einem Aufprall wird dann die Relativbewegung des Motorblocks zum Fahrzeugaufbau verwendet, um das Gurtband um einen bestimmten Betrag weiter aufzuwickeln und zu straffen.

In einer anderen, bekannten Ausführungsform ist ein Rückstrammer (DE-OS 28 14 550) in eine Aufwickelrolle integriert und wird mit einem pyrotechnischen Treibsatz aktiviert.

In einer bekannten, direkt am Gurtband angreifenden Ausführungsform eines Gurtstrammers (DE-A-27 26 096) wird aus einer mit einem pyrotechnischen Treibsatz aktivierbaren Zylinder-Kolben-Einheit der Kolben herausbewegt. Dabei nimmt er das Gurtband mit und führt dieses zwischen zwei Halterungen hindurch, so daß eine Gurtschlaufe entsteht, die die aktive Länge des angelegten Gurtbands verringert. Diese Ausführung baut relativ groß und das Gurtband wird durch die starken Umlenkungen stark belastet.

In einer weiteren Ausführungsform eines Gurtstrammers (DE-A-37 15 845) wird sowohl das Prinzip einer Gurtbremse mit Hilfe einer Klemmeinrichtung als auch das Rückstrammen realisiert. Dazu wird die Klemmeinrichtung durch einen im Aufprallfall mit einem Druckgas beaufschlagbaren Arbeitskolben aktiviert und damit das Gurtband eingeklemmt und gehalten. Zugleich wird die Klemmeinrichtung durch den Arbeitskolben so bewegt, daß das Gurtband gestrafft wird.

In einer ähnlichen, gattungsgemäßen Ausführung (DE-A-34 00 115) ist der Gurtstrammer als separates Bauteil am Fahrzeugaufbau fest angebracht. Das Gurtband ist durch eine Klemmeinrichtung mit beweglichen Klemmbacken geführt, wobei diese am Ende einer Kolbenstange eines Kolbens einer Zylinder-Kolben-Einheit angebracht ist. Der Kolben liegt in der nicht aktivierten Stellung im Bereich des einseitig geschlossenen Zylinders, wo eine pyrotechnische Treibladung angebracht ist. Zudem ist die Kolbenstange bis zu den Klemmbacken der Klemmeinrichtung durchbohrt. Bei einem Aufprall wird die pyrotechnische Treibladung gezündet. Durch den Druck der Treibgase wird über die Bohrung in der Kolbenstange die Klemmeinrichtung betätigt und das Gurtband eingeklemmt. Zudem wird der Kolben in Richtung einer Straffung des Gurtbandes bewegt und die Klemmeinrichtung mit dem eingeklemmten Gurtband über die Kolbenstange in diese Richtung gezogen. Diese Ausführung baut relativ lang und die Verbrennungsvorgänge der Treibladung sind nicht beeinflußbar und für den Strammvorgang ungünstig. So steht zum Anfang, nach Zündung der Treibladung, viel Energie zur Verfügung, die im weiteren Verlauf der Strammbewegung wegen der beschränkten Größe der Treibladung und des sich schnell vergrößernden Brennraumvolumens rasch abnimmt.

Aufgabe der Erfindung ist es demgegenüber, einen gattungsgemäßen Gurtstrammer so weiterzubilden, daß bei geringem Platzbedarf die Strammbewegung durch einen günstigeren Druckverlauf bei der Verbrennung der pyrotechnischen Treibladung verbessert wird.

Diese Aufgabe wird mit den kennzeichnenden Merkmalen des Anspruchs 1 gelöst.

Gemäß Anspruch 1 besteht die Zylinder-Kolben-Einheit aus zwei teleskopartig ineinandergeschobenen Rohren mit einem Außenrohr, das einseitig geschlossen ist und in diesem Bereich eine pyrotechnische Treibladung enthält, die in Richtung auf den offenen Bereich auslösbar ist.

Auch das eingeschobene Innenrohr ist einseitig an der Austrittsseite geschlossen, so daß im offenen Bereich des Innenrohrs ein Volumen als Brennkammer für die pyrotechnische Ladung gebildet ist.

Durch die im nicht aktivierten Zustand teleskopartig ineinandergeschobenen Rohrteile benötigt der erfindungsgemäße Gurtstrammer nur einen geringen Einbauraum und kann daher auch einfacher ggfs. in andere Bauteile integriert werden. Durch die Zündung der pyrotechnischen Treibladung in einen Brennraum hinein, wo von vornherein ein Volumen zur Ausbreitung der entstehenden Treibgase zur Verfügung steht, wird ein günstigerer und gleichmäßigerer Druckverlauf ohne hohe Druckspitze zu Anfang und schnell abfallendem Druck erreicht. Somit wird insgesamt der Wirkungsgrad des Gurtsicherheitssystems erhöht.

Da der erfindungsgemäße Gurtstrammer ein separates Bauteil ist, das im nicht aktivierten Fall in die übrige Gurtmechanik nicht eingreift, ist auch ein nachträglicher Einbau in einem Fahrzeug als Zubehörteil möglich.

Der Druckverlauf und damit die Strammbewegung können durch die Größe und Gestalt der Brennkammer beeinflußt und an die jeweiligen Gegebenheiten angepaßt werden.

Eine einfache Anpassung an unterschiedliche Fahrzeuge und unterschiedliche Gurtsysteme kann nach Anspruch 2 vorteilhaft damit erreicht werden, daß in der Brennkammer jeweils ein Formteil angeordnet ist. Dieses Formteil bestimmt dann die Größe und Gestalt des Brennkammervolumens. Ein solches Formteil kann preisgünstig und leicht aus geschäumtem Kunststoff hergestellt sein. Durch einen Abbrand des Formteils, was bei entsprechender Materialwahl möglich ist, läßt sich der Verbrennungs-Druckverlauf (Kennung) weiter variieren. Eine vorteilhafte Gestalt eines Formteils ist mit den Merkmalen des Anspruchs 3 angegeben, wobei dieses ein glockenförmiges Teil ist, das mit seinem schmalen Ende in Richtung auf die pyrotechnische Treibladung ragt.
Nach Anspruch 4 wird vorteilhaft oberhalb der pyrotechnischen Treibladung ein im Aufbau an sich bekannter, mechanischer Beschleunigungssensor für die Zündung der Treibladung angebracht. Damit ist der erfindungsgemäße Gurtstrammer ein selbständig funktionsfähiges Bauteil, das lediglich am Fahrzeugaufbau fest montiert werden muß, sonst aber keine weiteren Anschlüsse benötigt.

Auch die Klemmeinrichtung für das Gurtband ist einfach und platzsparend ausführbar. Nach Anspruch 5 wird dazu die Klemmeinrichtung am vorstehenden Ende des Innenrohrs befestigt. Die Klemmeinrichtung besteht im wesentlichen aus einem Gehäuse mit zwei Keilen, wobei das Gurtband durch einen Schlitz im Gehäuse geführt ist und ein Keil eine Schlitzwand bildet. Dieser Keil ist beweglich und mit dem ortsfesten Außenrohr flexibel verbunden. Der andere Keil bzw. eine Keilfläche ist mit dem Gehäuse fest verbunden. Die Keilflächen sind so gerichtet, daß beim Ausschieben des Innenrohrs aus dem Außenrohr der bewegliche Keil wegen seiner Verbindung zum Außenrohr auf das Gurtband zubewegt wird und dieses im Gehäuse festklemmt.

Nach Anspruch 6 ist der bewegliche Keil mit dem ersten Keil, bevorzugt durch ein flexibles Band, verbunden und wird dadurch in der unbetätigten Lage gehalten.

Zweckmäßig wird nach Anspruch 7 die Verbindung zwischen dem beweglichen Keil und dem Außenrohr über eine Spiralfeder durchgeführt. Auch andere, flexible Mittel, wie beispielsweise ein Gummiband, sind möglich. Auch eine nicht dehnbare Verbindung, beispielsweie eine Drahtverbindung, ist grundsätzlich möglich, die zu Beginn der Austrittsbewegung des Innenrohrs die Verschiebung der Keile bewirken muß. Wenn der bewegliche Keil in seine Klemmstellung gebracht ist, hält die Klemmverbindung durch Selbsthemmung. Eine feste Verbindung muß so gestaltet sein, daß sie nach Herstellung der Klemmverbindung, beispielsweise über eine Sollbruchstelle, aufreißt und den weiteren Weg des Innenrohrs für die Strammung des Gurtbandes ungehindert freigibt.

Anhand einer Zeichnung wird ein Ausführungsbeispiel der Erfindung mit weiteren Einzelheiten, Merkmalen und Vorteilen näher erläutert.

Es zeigen
- Fig. 1: einen Längsschnitt durch eine schematische Darstellung eines Gurtstrammers,
- Fig. 2: eine Draufsicht auf den Gurtstrammer nach Fig. 1,
- Fig. 3: einen Schnitt durch eine vergrößerte Darstellung einer Klemmeinrichtung am unteren Ende des Gurtstrammers nach Fig. 1.

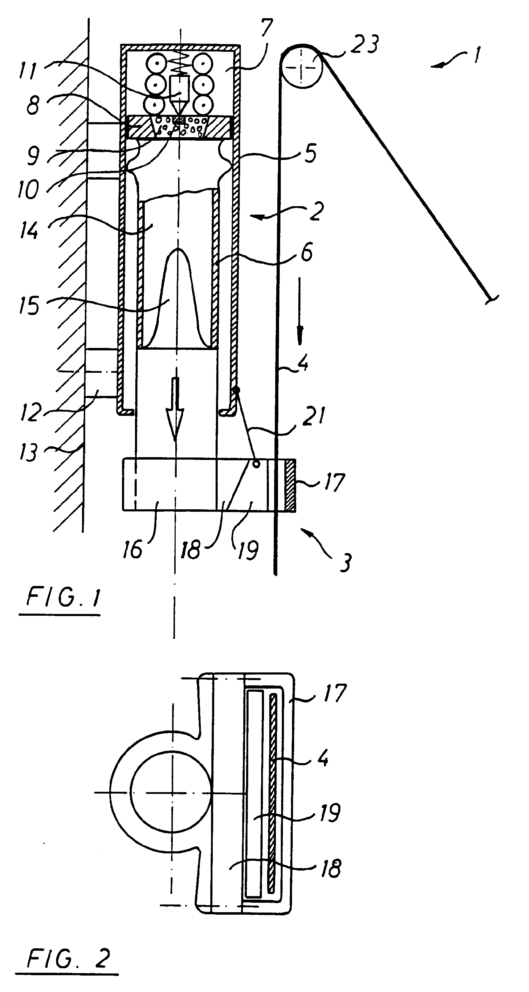

In Fig. 1 ist ein Längsschnitt durch einen Gurtstrammer 1 dargestellt, der aus einer Zylinder-Kolben-Einheit 2 und einer Klemmeinrichtung 3 für ein Gurtband 4 eines Dreipunkt-Sicherheitsgurts besteht.

Die Zylinder-Kolben-Einheit 2 besteht aus zwei teleskopartig ineinandergeschobenen Rohren mit einem Außenrohr 5 und einem Innenrohr 6. Das Außenrohr 5 ist in seinem oberen Bereich einseitig geschlossen und bildet dort eine Kammer 7, die nach unten hin durch eine Platte 8 abgeschlossen ist. In der Platte 8 ist eine pyrotechnische Treibladung 9 angeordnet mit einem Zündhütchen 10 im Zentrum.

In der Kammer 7 ist ein Beschleunigungssensor 11 angeordnet, der im wesentlichen aus einem kegelförmigen Teil besteht, dessen Spitze auf das Zündhütchen 10 aufgesetzt ist. Das Außenrohr 5 ist über Halterungen 12 mit dem Fahrzeugaufbau 13, bevorzugt der B-Säule, fest verbunden.

Im Außenrohr 5 ist das Innenrohr 6 dicht anliegend geführt und steht in der Ruhestellung mit einem nach oben offenen Bereich an der Platte 8 an. Dadurch wird eine Brennkammer 14 gebildet. In dieser ist ein glockenförmiges Formteil 15 aus Schaumkunststoff angeordnet, wobei dieses mit seinem schmalen Ende in Richtung auf die pyrotechnische Treibladung 9 weist.

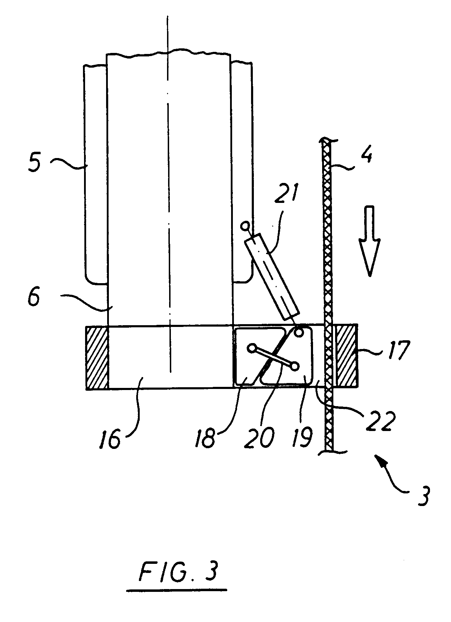

Das Innenrohr 6 ragt mit einem unteren, endseitigen Bereich 16 aus dem Außenrohr 5 heraus. Dort ist die Klemmeinrichtung 3 mit einem Gehäuse 17 befestigt (sh. auch Draufsicht in Fig. 2 und vergrößerte Darstellung in Fig. 3). In dem Gehäuse 17 sind zwei über die Breite des Gurtbands 4 langgestreckte Keile angebracht, wovon ein erster Keil 18 mit dem Gehäuse 17 fest verbunden ist. Ein zweiter Keil 19 ist beweglich ausgeführt und einerseits über eine Verbindung 20 mit dem ersten Keil 18 und andererseits über eine Spiralfeder 21 mit dem ortsfesten Außenrohr 5 verbunden. Die Keilflächen der Keile 18 und 19 weisen schräg nach oben in Richtung auf das Gurtband 4.

Der dargestellte Gurtstrammer 1 hat folgende Funktion:

Ein Aufprall mit starker Verzögerung wird vom Beschleunigungssensor 11 erkannt und über dessen Kegelspitze das Zündhütchen 10 aktiviert und die pyrotechnische Treibladung 9 in die Brennkammer 14 hinein gezündet. Die Gestalt und Größe der Brennkammer 14 und damit der Verbrennungsablauf sind wesentlich durch die Größe und Gestalt des Formteils 15 bestimmt.

Durch den bei der Verbrennung entstehenden Gasdruck wird das Innenrohr 6 nach unten aus dem Außenrohr 5 herausgeschoben.

Dabei hält die Spiralfeder 21 vorerst den zweiten, beweglichen Keil 19 auf seiner ursprünglichen Höhe. Der erste, mit dem Gehäuse 17 und damit mit dem nach unten bewegten Innenrohr 6 fest verbundene, erste Keil 18 wird ebenfalls nach unten bewegt. Durch die schräg nach oben laufenden Keilflächen wird dabei der in gleicher Höhe gehaltene, zweite Keil 19 in Richtung auf das Gurtband 4 bewegt. Der Schlitz 22, in dem das Gurtband 4 geführt ist, wird verkleinert und das Gurtband 4 gefaßt und zwischen der Gehäusewand und einer Wand des beweglichen Keils 19 eingeklemmt. Dieser Klemmvorgang erfordert nur einen geringen Weg des Innenrohrs 6. Die Klemmverbindung hält sich durch Selbsthemmung, wobei diese durch die Spiralfeder 21 unterstützt wird.

Nachdem das Gurtband 4 gefaßt und an der Klemmeinrichtung 3 eingeklemmt ist, wird diese zusammen mit dem Innenrohr 6 und dem eingeklemmten Gurtband 4 weiter nach unten bewegt. Dadurch wird das über eine Rolle 23 umgelenkte Gurtband 4 stramm gezogen und gestrafft.

## Patentansprüche

1. Gurtstrammer (1) für Kraftfahrzeuge mit einem Dreipunkt-Sicherheitsgurt (4),
mit einer unter der Wirkung eines Antriebs beweglich angeordneten Klemmeinrichtung (3) für das Gurtband (4) mit wenigstens einer beweglichen Klemmbacke (19),
mit einer druckmittelbeaufschlagbaren Zylinder-Kolben-Einheit (2) als Antrieb,
mit einer Verbindung des Kolbens der Zylinder-Kolben-Einheit (2) zur Klemmeinrichtung (3),
dadurch gekennzeichnet,
daß die Zylinder-Kolben-Einheit (2) aus zwei teleskopartig ineinandergeschobenen Rohren (5,6) besteht,
mit einem Außenrohr (5), das einseitig geschlossen ist und dort eine pyrotechnische Treibladung (9) enthält, die in Richtung auf den offenen Bereich auslösbar ist,
mit einem Innenrohr (6), das einseitig geschlossen ist und mit seiner offenen Seite im Außenrohr (5) steckt, so daß im offenen Bereich ein Volumen als Brennkammer (14) für die pyrotechnische Treibladung (9) gebildet ist, wobei nach der Zündung der Treibladung (9) das Innenrohr (6) aus dem Außenrohr (5) herausgeschoben wird.

2. Gurtstrammer nach Anspruch 1, dadurch gekennzeichnet, daß in der Brennkammer (14) wenigstens ein Formteil (15) angeordnet ist.

3. Gurtstrammer nach Anspruch 2, dadurch gekennzeichnet, daß das Formteil (15) ein glockenförmiges Teil ist, das mit seinem schmalen Ende in Richtung auf die pyrotechnische Treibladung (9) ragt und mit seinem breiten Ende den Durchmesser des Innenrohrs (6) einnimmt.

4. Gurtstrammer nach einem der Ansprüche 1 bis 3, dadurch gekennzeichnet, daß oberhalb der pyrotechnischen Treibladung (9) ein mechanischer Beschleunigungssensor (11) zur Zündung der Treibladung (9) angebracht ist.

5. Gurtstrammer nach einem der Ansprüche 1 bis 4, dadurch gekennzeichnet, daß die Klemmeinrichtung (3) am vorstehenden Ende des Innenrohrs (6) befestigt ist und aus einem Gehäuse (17) mit zwei Keilen (18, 19) besteht, wobei in einem Schlitz (22) zwischen einem Keil (19) und einer Gehäusewand das Gurtband (4) geführt ist und
daß ein Keil (18) mit dem Gehäuse (17) fest verbunden ist und der andere Keil (19) beweglich und mit dem ortsfesten Außenrohr (5) verbunden ist und die Keilflächen so gerichtet sind, daß beim Ausschieben des Innenrohrs (6) aus dem Außenrohr (5) der bewegliche Keil (19) auf das Gurtband (4) zu bewegt wird, so daß dieses im Gehäuse (17) festgeklemmt wird.

6. Gurtstrammer nach Anspruch 5, dadurch gekennzeichnet, daß der zweite, bewegliche Keil (19) mit dem ersten Keil (18) verbunden (Verbindung 20) und in der unbetätigten Lage dadurch gehalten ist.

7. Gurtstrammer nach Anspruch 5 oder 6, dadurch gekennzeichnet, daß die Verbindung zwischen dem zweiten, beweglichen Keil (19) und dem Außenrohr (5) über eine Spiralfeder (21) durchgeführt ist.

## Claims

1. Seat-belt tensioner (1) for motor vehicles equipped with a three-point safety belt (4),
having a clamping mechanism (3) for the belt strap (4) which is arranged so as to be movable under the action of a drive and which has at least one movable gripping jaw (19),
having, as the drive, a cylinder-and-piston unit (2) adapted to be acted on by a pressure medium,
having a connection from the piston of the cylinder-and-piston unit (2) to the clamping mechanism (3),
characterised in that
the cylinder-and-piston unit (2) consists of two tubes (5, 6) inserted telescopically one inside the other,
with an outer tube (5) which is closed at one end and there contains a pyrotechnic propelling charge (9) which can be activated towards the open portion,
with an inner tube (6) which is closed at one end and is pushed with its open side in the outer tube (5), thereby forming in the open portion a volume as a combustion chamber (14) for the pyrotechnic propelling charge (9), the inner tube (6) being pushed out of the outer tube (5) after ignition of the propelling charge (9).

2. Seat-belt tensioner according to claim 1, characterised in that at least one moulded part (15) is disposed in the combustion chamber (14).

3. Seat-belt tensioner according to claim 2, characterised in that the moulded part (15) is a bell-shaped part which projects with its narrow end towards the pyrotechnic propelling charge (9) and with its broad end receives the diameter of the inner tube (6).

4. Seat-belt tensioner according to any of claims 1 to 3, characterised in that a mechanical acceleration sensor (11) is mounted above the pyrotechnic propelling charge (9) to ignite said propelling charge (9).

5. Seat-belt tensioner according to any of claims 1 to 4, characterised in that the clamping mechanism (3) is fixed to the projecting end of the inner tube (6) and consists of a housing (17) with two wedges (18, 19), the belt strap (4) being fed in a slot (22) between one wedge (19) and one wall of the housing and
in that one wedge (18) is rigidly joined to the housing (17) and the other wedge (19) is movable and joined to the fixed outer tube (5) and the wedge faces are so directed that when the inner tube (6) is pushed out of the outer tube (5) the movable wedge (19) is moved onto the belt strap (4), thereby tightly clamping the latter in the housing (17).

6. Seat-belt tensioner according to claim 5, characterised in that the second, movable wedge (19) is joined to the first wedge (18) (connection 20) and is held thereby in the inactivated position.

7. Seat-belt tensioner according to claim 5 or 6, characterised in that the connection between the second, movable wedge (19) and the outer tube (5) is effected by means of a flat coil spring (21).

## Revendications

1. Raidisseur de ceinture (1) pour des véhicules automobiles équipés d'une ceinture de sécurité à triple point d'appui (4), comprenant
un dispositif de serrage (3) pour la sangle (4), qui est mobile sous l'action d'un organe d'entraînement et qui comporte au moins une mâchoire de serrage mobile (19),
un groupe cylindre-piston (2) actionnable par un fluide sous pression, en tant qu'organe d'entraînement,
une liaison entre le piston du groupe cylindre-piston (2) et le dispositif de serrage (3),
caractérisé en ce que
le groupe cylindre-piston (2) se compose de deux tubes (5, 6) glissés télescopiquement l'un dans l'autre,
avec un tube extérieur (5) qui est fermé d'un côté, où il contient une charge pyrotechnique (9) qui peut être déclenchée en direction de sa partie ouverte,
avec un tube intérieur (6) qui est fermé d'un côté et est inséré dans le tube extérieur (5) par sa partie ouverte, ce qui fait qu'un volume servant de chambre de combustion (14) pour la charge pyrotechnique (9) est formé dans la partie ouverte, le tube intérieur (6) étant expulsé du tube extérieur (5) à la suite de la mise à feu de la charge pyrotechnique (9).

2. Raidisseur de ceinture selon la revendication 1, caractérisé en ce qu'au moins un élément profilé (15) est disposé dans la chambre de combustion (14).

3. Raidisseur de ceinture selon la revendication 2, caractérisé en ce que l'élément profilé (15) est un élément en forme de cloche dont l'extrémité mince est dirigée vers la charge pyrotechnique (9) et dont l'extrémité large occupe le diamètre du tube intérieur (6).

4. Raidisseur de ceinture selon l'une quelconque des revendications 1 à 3, caractérisé en ce qu'un détecteur mécanique d'accélération (11) pour la mise à feu de la charge pyrotechnique (9) est disposé au-dessus de la charge pyrotechnique (9).

5. Raidisseur de ceinture selon l'une quelconque des revendications 1 à 4, caractérisé en ce que le dispositif de serrage (3) est fixé à l'extrémité saillante du tube intérieur (6) et se compose d'un boîtier (17) avec deux coins (18, 19), la sangle (4) passant dans une fente (22) entre un coin (19) et une paroi du boîtier, et
en ce qu'un coin (18) est fixé rigidement au boîtier (17), l'autre coin (19) est mobile et relié au tube extérieur (5) fixe, et les surfaces formant coin sont orientées de sorte que, quand le tube intérieur (6) sort du tube extérieur (5), le coin mobile (19) est déplacé vers la sangle (4), ce qui fait que cette dernière est coincée fermement dans le boîtier (17).

6. Raidisseur de ceinture selon la revendication 5, caractérisé en ce que le second coin mobile (19) est relié au premier coin (18) (liaison 20) et est ainsi maintenu dans la position de repos.

7. Raidisseur de ceinture selon la revendication 5 ou 6, caractérisé en ce que la liaison entre le second coin mobile (19) et le tube extérieur (5) est réalisée au moyen d'un ressort en spirale (21).
